# EUROPEAN PATENT APPLICATION

(11) **EP 3 995 018 A1**
(43) Date of publication of application: **11.05.2022**
(21) Application number: 19946499.1
(22) Date of filing: 25.09.2019
(51) Int. Cl.: A24F 47/00

(54) **BATTERY UNIT, INFORMATION PROCESSING METHOD, AND PROGRAM**

(71) Applicant: Japan Tobacco Inc., Tokyo 105-6927 (JP)
(72) Inventor: ONO, Yasuhiro, Tokyo 130-8603 (JP)
(74) Representative: Hoffmann Eitle
(86) International application number: PCT/JP2019/037498
(87) International publication number: WO 2021/059380

(57) **Abstract**

This battery unit is for an aerosol generation device that generates aerosol, the battery unit being provided with: a count unit (200) for measuring a puff count that indicates the number of times of puff motions for inhaling aerosol; and a notification unit for notifying, on a user terminal (2), state information about a state of the aerosol generation device to the user terminal (2) at a predetermined frequency on the basis of the puff count. Accordingly, it is possible to reduce consumption of a battery (110) included in the aerosol generation device.

## Description

### Technical Field

The present invention relates to a battery unit, an information processing method, and a program.

### Background Art

Patent Literature 1 discloses a technique for notifying a user of state information of an electronic cigarette including, for example, the number of puffs indicating the number of times a puff action for inhaling an aerosol is performed.

### Citation List

### Patent Literature

Patent Literature 1: US10172392B

### Summary of Invention

### Technical Problem

A conventional electronic cigarette as described in Patent Literature 1 is required to be reduced in the size of a main body thereof. Since the size of a battery included in the electronic cigarette is limited, the battery capacity is also limited.

In the conventional electronic cigarette, no consideration is given to a timing for notifying a user of the state of the electronic cigarette. Thus, in a case where the user is notified of the state of the electronic cigarette each time a puff action is performed, the electric power consumption of the electronic cigarette may increase, and battery consumption may also increase.

Accordingly, some aspects of the present invention have been made in view of the foregoing situation, and an object thereof is to provide a technique that can reduce the consumption of a battery included in an aerosol generation device for generating an aerosol.

### Solution to Problem

A battery unit according to an aspect of the present invention is a battery unit for an aerosol generation device for generating an aerosol, including a counting unit that counts the number of puffs indicating the number of times a puff action for inhaling the aerosol is performed, and a notification unit that notifies a user terminal of state information regarding a state of the aerosol generation device at the user terminal, based on the number of puffs, at a predetermined frequency.

An information processing method according to an aspect of the present invention is an information processing method executed by an aerosol generation device for generating an aerosol, including a step of counting the number of puffs indicating the number of times a puff action for inhaling the aerosol is performed, and a step of notifying a user terminal of state information regarding a state of the aerosol generation device at the user terminal, based on the number of puffs, at a predetermined frequency.

A program according to an aspect of the present invention causes a computer to implement a counting unit that counts the number of puffs indicating the number of times a puff action for inhaling an aerosol is performed, and a notification unit that notifies a user terminal of state information regarding a state of an aerosol generation device at the user terminal, based on the number of puffs, at a predetermined frequency.

According to these aspects, the user terminal is notified of state information regarding the state of the aerosol generation device at the user terminal, based on the counted number of puffs, at a predetermined frequency. Since an increase in the electric power consumption of the aerosol generation device can be suppressed, the consumption of a battery included in the aerosol generation device can be reduced.

In the present invention, the terms "unit" or "part" and "device" do not simply refer to physical means and may include functions of the "unit" or "part" and "device"", which are implemented by software. In addition, the functions of one "unit" or "part" or one "device" may be implemented by two or more physical means or devices, or the functions of two or more "units" or "parts" or two or more "devices" may be implemented by one physical means or device.

### Advantageous Effects of Invention

According to the present invention, it is possible to reduce the consumption of a battery included in an aerosol generation device.

### Brief Description of Drawings

[FIG. 1] FIG. 1 is a schematic configuration diagram of a state notification processing system for providing notification of a state of a flavor inhaler according to an embodiment of the present invention.
[FIG. 2A] FIG. 2A is a block diagram of a schematic configuration of the flavor inhaler according to the embodiment of the present invention.
[FIG. 2B] FIG. 2B is a diagram illustrating an example schematic appearance of the flavor inhaler according to the embodiment of the present invention.
[FIG. 3] FIG. 3 is a block diagram illustrating a schematic configuration of the flavor inhaler according to the embodiment of the present invention.
[FIG. 4] FIG. 4 is a block diagram illustrating another schematic configuration of the flavor inhaler according to the embodiment of the present invention.
[FIG. 5] FIG. 5 is a diagram illustrating another example schematic appearance of the flavor inhaler according to the embodiment of the present invention.
[FIG. 6] FIG. 6 illustrates another example schematic appearance of the flavor inhaler according to the embodiment of the present invention with an aerosol-generating substrate held.
[FIG. 7] FIG. 7 is a block diagram of a schematic configuration of a user terminal according to the embodiment of the present invention.
[FIG. 8] FIG. 8 is a schematic configuration diagram illustrating an example functional configuration of a control unit according to the embodiment of the present invention.
[FIG. 9] FIG. 9 is a flowchart illustrating an example of a state notification process according to a first embodiment of the present invention.
[FIG. 10] FIG. 10 is an explanatory diagram illustrating an example of the state notification process according to the first embodiment of the present invention.
[FIG. 11] FIG. 11 is a flowchart illustrating an example of a state notification process according to a second embodiment of the present invention.
[FIG. 12] FIG. 12 is a flowchart illustrating an example of a state notification process according to a third embodiment of the present invention.
[FIG. 13] FIG. 13 is a flowchart illustrating an example of a state notification process according to a fourth embodiment of the present invention.
[FIG. 14] FIG. 14 is an explanatory diagram illustrating an example of the state notification process according to the fourth embodiment of the present invention.
[FIG. 15] FIG. 15 is a diagram illustrating an example hardware configuration of a computer according to an embodiment of the present invention.

### Description of Embodiments

Embodiments of the present invention will be described hereinafter with reference to the accompanying drawings. The following embodiments are illustrative for describing the present invention and are not intended to limit the present invention to only the embodiments thereof. Further, the present invention may be modified in various ways without departing from the gist thereof. In addition, in the drawings, the same structural elements are denoted by the same reference signs as much as possible, and redundant description will be omitted.

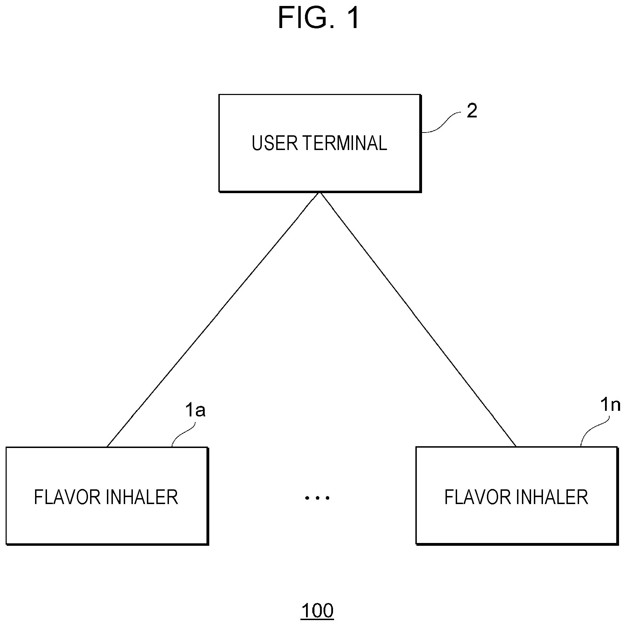

FIG. 1 is a schematic configuration diagram (system configuration diagram) of a state notification processing system for providing notification of a state of a flavor inhaler according to this embodiment of the present invention. As illustrated in FIG. 1, a state notification processing system 100 is configured to include, for illustrative purposes, n flavor inhalers 1 (n is any integer value greater than or equal to 1), and a user terminal 2 configured be capable of communicating with the n flavor inhalers 1.

The "flavor inhaler 1" is a tool used to inhale flavor and is intended to be, for example, but not limited to, an electronic cigarette, a heat-not-burn tobacco product, or a conventional tobacco product. Further, the flavor inhaler 1 is an aerosol generation device that generates an aerosol and that is used to inhale the generated aerosol. The action of inhaling an aerosol is referred to as "puff action", and the number of times a puff action is performed is referred to as the "number of puffs". The aerosol generation device is intended to be, for example, an electronic cigarette, a heat-not-burn tobacco product, or a nebulizer for medical use. More specifically, the aerosol generation device is, for example, a device that atomizes a liquid (aerosol source) using electric power to generate an aerosol. The aerosol is obtained by atomizing an aerosol source and is a suspension of fine particles in a gas. The aerosol generated by the aerosol generation device may include a flavor. Examples of the aerosol generation device include heat-not-burn tobacco products (such as T-vapor and Infused) and electronic cigarettes (E-vapor). The aerosol generation device further includes a type that directly heats tobacco (direct heating), a type that indirectly heats tobacco (indirect heating), and a type that heats a liquid. Alternatively, the aerosol generation device may generate SAWs (Surface Acoustic Waves) using a piezoelectric element substrate having a pair of comb electrodes to atomize a liquid. In the figure, a flavor inhaler 1a and a flavor inhaler In are illustrated as n flavor inhalers. In the following description, these n flavor inhalers are simply referred to as "flavor inhalers 1" with some reference signs omitted, when they are described without being distinguished from each other.

The user terminal 2 is implemented by, for example, a smartphone, a game console, or a personal computer. One user terminal 2 is illustrated in the figure, but it is not limited thereto. The state notification processing system 100 may include a plurality of user terminals 2.

The flavor inhaler 1 and the user terminal 2 are associated with each other and are capable of executing short-range wireless communication such as Bluetooth [registered trademark] or BLE (Bluetooth Low Energy) communication to transmit and receive data to and from each other. Data transmission and reception between the flavor inhaler 1 and the user terminal 2 is not limited to BLE communication and may be executed by any communication such as Wi-Fi [registered trademark], LPWAN (Low Power Wide Area Network), or NFC (Near Field Communication). In addition, data transmission and reception between the flavor inhaler 1 and the user terminal 2 is not limited to wireless communication and may be wired communication such as USB (Universal Serial Bus), Mini USB, Micro USB, or Lightning.

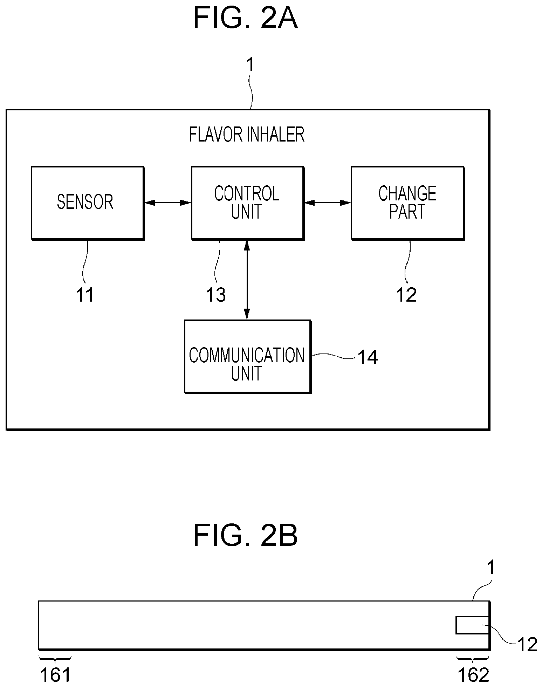

FIG. 2A is a block diagram of a schematic configuration of the flavor inhaler according to the embodiment of the present invention. It should be noted that FIG. 2A schematically and conceptually illustrates components included in the flavor inhaler 1 and does not illustrate the precise arrangement, shape, size, positional relationship, and the like of the components and the flavor inhaler 1. It should also be noted that the flavor inhaler 1 may include a component not illustrated in FIG. 2A, such as a tobacco capsule or a liquid cartridge.

A sensor 11 represents a sensor that detects information regarding, for example, inhalation of a user. The sensor 11 may be any type of sensor for detecting a puff action of the user, such as a flow sensor, a flow velocity sensor, or a pressure sensor. The sensor 11 may be a button to be pressed by the user to perform a puff action. For example, the sensor 11 may be an inhalation sensor and may detect an inhalation of the user through the flavor inhaler 1. The sensor 11 may be an air flow sensor and may detect an air flow generated by inhalation of the user. The sensor 11 may be a GPS sensor that measures the position of the flavor inhaler 1, or may be a gyro sensor or the like for detecting the angle, posture, and the like of the flavor inhaler 1.

A change part 12 is a block that generates a predetermined change that is externally observable. The change part 12 may be an LED (Light Emitting Diode) that emits light of a predetermined color, for example, a blue LED, and the predetermined change may be light emission of a predetermined color, for example, blue. The predetermined color is not limited to blue and may be any color. The predetermined change may be a change in the color of light emission or a change in the intensity of light emission according to the strength (pressure) of inhalation, which is sensed by the sensor 11. The change part 12 is not limited to an LED and may be a light source having another configuration that emits light of a predetermined color.

FIG. 2B is a diagram illustrating an example schematic appearance of the flavor inhaler according to the embodiment of the present invention. The arrangement of the change part 12 will be described with reference to FIG. 2B. As presented in FIG. 2B, the flavor inhaler 1 may be, but not limited to, of a stick shape including two ends 161 and 162. The user holds the one end 161 in the mouth to inhale. The user may hold the one end 161 in the mouth to inhale through a mouthpiece for a cigarette or the like attachable to the one end 161. In a case where the flavor inhaler 1 has the shape as presented in FIG. 2B, the change part 12 is preferably disposed in the other end 162 of the two ends. The change part 12 is at least a portion of an outer surface of the flavor inhaler 1 and may have any shape such as a substantially rectangular shape as presented in FIG. 2B or an annular shape (not illustrated) along the outer circumference of the flavor inhaler 1.

Referring back to FIG. 2A, a control unit 13 is a block that causes the change part 12 to generate a predetermined change on the basis of at least a signal from the sensor 11. The control unit 13 may cause the change part 12 to produce light emission of a predetermined color when, for example, the magnitude of the signal from the sensor 11 or the strength of inhalation determined based on the signal is greater than or equal to a predetermined threshold value. Further, the control unit 13 may change the color or intensity of light emission of the change part 12 in accordance with, for example, the magnitude of the signal from the sensor 11 or the strength of inhalation determined based on the signal. For example, the control unit 13 may increase the intensity of light emission when inhalation is strong, and decrease the intensity of light emission when inhalation is weak. Alternatively, for example, the control unit 13 may divide the strength of inhalation into a plurality of levels, set a predetermined color for each of the plurality of levels, and cause emission of light of the predetermined color corresponding to the strength of inhalation. The control unit 13 may be an electronic circuit module configured as a microprocessor or a microcomputer.

A communication unit 14 (notification unit) communicates with the user terminal 2 illustrated in FIG. 1 or another computer. For example, the communication unit 14 notifies the user terminal 2 of state information regarding the state of the flavor inhaler 1 at the user terminal 2, based on the number of puffs, every predetermined number of puffs (such as, for example, 20 puffs). The communication unit 14 may be implemented using at least a network interface serving as a hardware resource. The control unit 13 is capable of transmitting various kinds of information detected by the sensor 11 to the user terminal 2 or another computer via the communication unit 14. The various kinds of information transmitted from the control unit 13 to the user terminal 2 or another computer via the communication unit 14 is, for example, output information for allowing the user terminal 2 to output the state of the flavor inhaler 1. The communication unit 14 is capable of receiving various kinds of information transmitted from the user terminal 2 or another computer.

The flavor inhaler 1 according to an embodiment of the present invention includes a conventional tobacco product. The conventional tobacco product does not include the sensor 11, the control unit 13, or the communication unit 14, but a burning portion thereof corresponds to the change part 12. This is because a predetermined change in color or temperature is generated in the burning portion of the conventional tobacco product in response to a puff action of the user.

In a case where the flavor inhaler 1 is a conventional tobacco product (for example, a cigarette), a mouthpiece (for example, a mouthpiece for a cigarette) attached to one end of the tobacco product may include all or some of the functions of the sensor 11, the control unit 13, and the communication unit 14 in FIG. 2A. In this configuration, the mouthpiece is capable of transmitting various kinds of information such as inhalation information detected by the sensor 11 to the user terminal 2 or another computer.

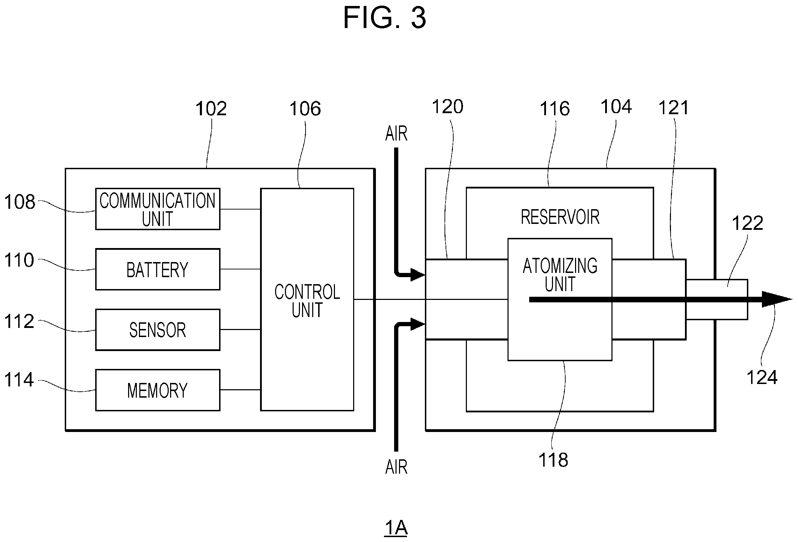

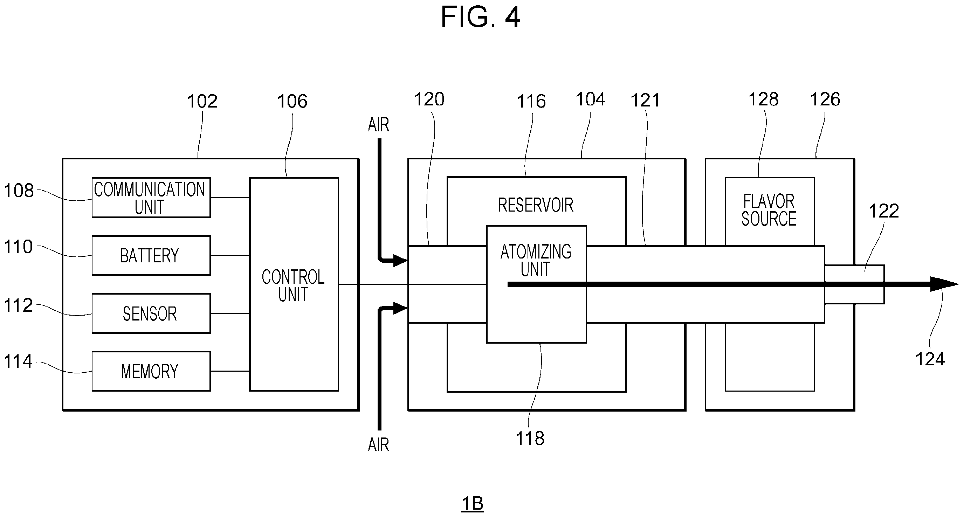

FIG. 3 is a block diagram illustrating a schematic configuration of the flavor inhaler according to the embodiment of the present invention. As illustrated in FIG. 3, a flavor inhaler 1A includes a first member 102 (battery unit) and a second member 104 (cartridge). As illustrated in the diagram, in one example, the first member 102 may include a control unit 106, a communication unit 108, a battery 110, a sensor 112, and a memory 114. The control unit 13 in FIG. 2A corresponds to the control unit 106 in FIG. 3, the sensor 11 in FIG. 2A corresponds to the sensor 112 in FIG. 3, and the communication unit 14 in FIG. 2A corresponds to the communication unit 108 in FIG. 3. In FIG. 3 and FIG. 4, the first member 102 (battery unit) is described as, but not limited to, an element included in the flavor inhaler 1A. For example, an element included in the first member 102, that is, at least one of the control unit 106, the communication unit 108, the battery 110, the sensor 112, or the memory 114, may be an element external to the flavor inhaler 1A.

In one example, the second member 104 may include a reservoir 116, an atomizing unit 118, an air intake flow path 120, an aerosol flow path 121, and an inhalation port part 122. Some of the components included in the first member 102 may be included in the second member 104. Some of the components included in the second member 104 may be included in the first member 102. The second member 104 may be configured to be removably attached to the first member 102. Alternatively, all of the components included in the first member 102 and the second member 104 may be included in the same housing instead of the first member 102 and the second member 104.

The reservoir 116 holds an aerosol source. For example, the reservoir 116 is composed of a fibrous or porous raw material and holds an aerosol source as a liquid in gaps between fibers or in pores of the porous material. As the fibrous or porous raw material described above, for example, cotton, fiberglass, or a tobacco raw material can be used. The reservoir 116 may be configured as a tank accommodating a liquid. The aerosol source is a liquid such as a polyhydric alcohol, for example, glycerin or propylene glycol, or water. In a case where the flavor inhaler 1A is a medical inhaler such as a nebulizer, the aerosol source may also include a medicine to be inhaled by a patient. In another example, the aerosol source may include a tobacco raw material or an extract derived from a tobacco raw material that releases an inhaling flavor component when heated. The reservoir 116 may have a configuration in which the aerosol source can be replenished as it is consumed. Alternatively, the reservoir 116 may be configured such that the reservoir 116 itself can be replaced when the aerosol source is consumed. The aerosol source is not limited to a liquid and may be a solid. In a case where the aerosol source is a solid, for example, the reservoir 116 may be a hollow container that is not made of a fibrous or porous raw material.

The atomizing unit 118 is configured to atomize the aerosol source to generate an aerosol. When the sensor 112 detects a puff action, the atomizing unit 118 generates an aerosol. For example, a wick (not illustrated) may be disposed so as to couple the reservoir 116 and the atomizing unit 118 to each other. In this case, a portion of the wick communicates with the inside of the reservoir 116 and is in contact with the aerosol source. Another portion of the wick extends to the atomizing unit 118. The aerosol source is transferred from the reservoir 116 to the atomizing unit 118 by capillary action of the wick. In one example, the atomizing unit 118 includes a heater electrically connected to the battery 110. The heater is disposed in contact with or in close proximity to the wick. When a puff action is detected, the control unit 106 controls the heater of the atomizing unit 118 to heat the aerosol source transferred through the wick to atomize the aerosol source. In another example, the atomizing unit 118 may be an ultrasonic atomizer that atomizes the aerosol source by ultrasonic vibration. The atomizing unit 118 is connected to the air intake flow path 120, and the air intake flow path 120 communicates with the outside of the flavor inhaler 1A. The aerosol generated in the atomizing unit 118 is mixed with air taken in through the air intake flow path 120. A fluid mixture of the aerosol and the air is delivered to the aerosol flow path 121, as indicated by an arrow 124. The aerosol flow path 121 has a tubular structure for conveying the fluid mixture of the air and the aerosol generated in the atomizing unit 118 to the inhalation port part 122.

The inhalation port part 122 is located at a terminal end of the aerosol flow path 121 and is configured to open the aerosol flow path 121 to the outside of the flavor inhaler 1A. The user holds the inhalation port part 122 in the mouth and inhales to take air containing the aerosol into the oral cavity.

The communication unit 108 (notification unit) communicates with the user terminal or another computer. The communication unit 108 may be implemented using at least a network interface serving as a hardware resource.

The battery 110 supplies electric power to the components of the flavor inhaler 1A, such as the communication unit 108, the sensor 112, the memory 114, and the atomizing unit 118. The battery 110 may be chargeable when connected to an external power supply via a predetermined port (not illustrated) of the flavor inhaler 1A. Only the battery 110 may be removable from the first member 102 or the flavor inhaler 1A and may be replaceable with a new battery 110. Alternatively, the battery 110 may be replaceable with a new battery 110 by replacing the entire first member 102 with a new first member 102.

The sensor 112 may include a pressure sensor that detects pressure fluctuations or a flow sensor that detects a flow rate in the air intake flow path 120 and/or the aerosol flow path 121. The sensor 112 may also include a weight sensor that detects the weight of a component such as the reservoir 116. The sensor 112 may also be configured to detect a puff action performed by the user using the flavor inhaler 1A. The sensor 112 may also be configured to add up the amount of time during which the atomizing unit 118 is energized. The sensor 112 may also be configured to detect the height of the liquid level in the reservoir 116. The sensor 112 may also be configured to detect the SOC (State of Charge), the integrated current value, the voltage, and the like of the battery 110. The integrated current value may be determined by a current integration method, an SOC-OCV (Open Circuit Voltage) method, or the like. The sensor 112 may also be an operation button or the like operable by the user.

The control unit 106 may be an electronic circuit module configured as a microprocessor or a microcomputer. The control unit 106 may be configured to control the operation of the flavor inhaler 1A in accordance with a computer-executable command stored in the memory 114. The memory 114 is a storage medium such as a ROM, a RAM, or a flash memory. The memory 114 may store the computer-executable command described above, setting data necessary for controlling the flavor inhaler 1A, and the like. The memory 114 stores, for example, state information regarding the state of the aerosol generation device. The state information includes, for example, at least one of number-of-puff information regarding the number of puffs, number-of-remaining-puff information regarding the number of remaining puffs indicating the remaining number of times a puff action is executable, remaining-capacity information regarding the remaining capacity of a battery, or information regarding the number of puffs in each of continuous puff action periods, each continuous puff action period indicating a period of a series of actions in which a puff action is repeated a plurality of times. The battery remaining capacity may be displayed as a percentage (%) of how much of the entire amount remains, or may be displayed using another method. For example, the memory 114 may store various data such as control methods for the communication unit 108 (such as modes of light emission, audio emission, vibration, etc.), values detected by the sensor 112, and a heating history of the atomizing unit 118. The control unit 106 reads data from the memory 114 as necessary, uses the data to control the flavor inhaler 1A, and stores the data in the memory 114 as necessary.

FIG. 4 is a block diagram illustrating another schematic configuration of the flavor inhaler according to the embodiment of the present invention. As illustrated in the diagram, a flavor inhaler 1B includes a third member 126 in addition to the elements included in the flavor inhaler 1A in FIG. 4. The third member 126 may include a flavor source 128. In one example, in a case where the flavor inhaler 1B is an electronic cigarette, the flavor source 128 may include an inhaling flavor component of tobacco. As illustrated in the diagram, the aerosol flow path 121 extends across the second member 104 and the third member 126. The inhalation port part 122 is included in the third member 126.

The flavor source 128 is a component for imparting a flavor to the aerosol. The flavor source 128 is disposed in the middle of the aerosol flow path 121. The fluid mixture of the air and the aerosol generated by the atomizing unit 118 (it should be noted that the fluid mixture may hereinafter be referred to simply as the aerosol) flows to the inhalation port part 122 through the aerosol flow path 121. In this manner, the flavor source 128 is disposed downstream of the atomizing unit 118 with respect to the flow of the aerosol. In other words, the flavor source 128 is located closer to the inhalation port part 122 in the aerosol flow path 121 than the atomizing unit 118. Accordingly, the aerosol generated by the atomizing unit 118 passes through the flavor source 128 before reaching the inhalation port part 122. As the aerosol passes through the flavor source 128, the inhaling flavor component contained in the flavor source 128 is imparted to the aerosol. In one example, in a case where the flavor inhaler 1B is a heat-not-burn tobacco product, the flavor source 128 may be one derived from tobacco, such as a shredded tobacco or a processed product obtained by forming a tobacco raw material into a granular, sheet, or powder shape. Alternatively, the flavor source 128 may be one not derived from tobacco, which is made from a non-tobacco plant (for example, mint or a herb). In one example, the flavor source 128 includes a tobacco component. The flavor source 128 may contain a flavor component such as menthol. In addition to the flavor source 128, the reservoir 116 may also have a substance containing an inhaling flavor component. For example, the flavor inhaler 1B may be configured such that the flavor source 128 holds a flavor substance derived from tobacco and the reservoir 116 includes a flavor substance not derived from tobacco.

The user holds the inhalation port part 122 in the mouth and inhales. As a result, the user can take air containing the aerosol to which the flavor has been imparted into the oral cavity.

The control unit 106 is configured to control the flavor inhalers 1A and 1B (hereinafter may be collectively referred to as the "flavor inhaler 1") according to the embodiment of the present disclosure in various ways.

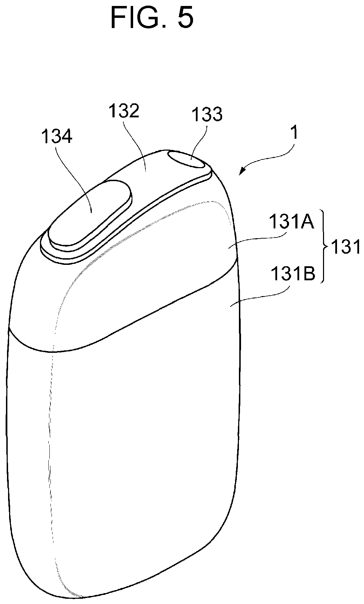

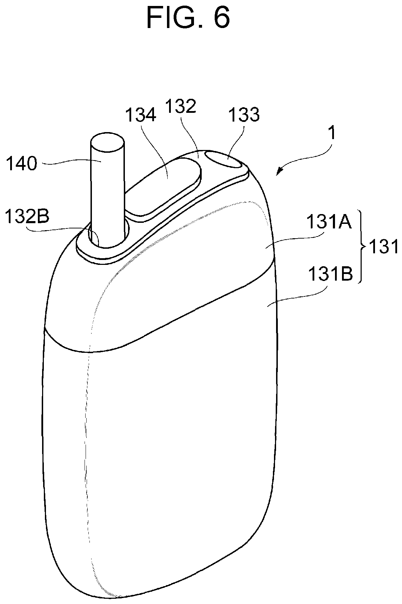

FIG. 5 is a diagram illustrating another example schematic appearance of the flavor inhaler according to the embodiment of the present invention. FIG. 6 illustrates another example schematic appearance of the flavor inhaler according to the embodiment of the present invention with an aerosol-generating substrate held. In this embodiment, for example, the flavor inhaler 1 is configured to heat an aerosol-generating substrate such as an inhalation article having a flavor-source material such as a filler that contains an aerosol source and a flavor source to generate an aerosol including a flavor. An inhalation article 140 may be used as the aerosol-generating substrate.

As will be understood by a person skilled in the art, the inhalation article 140 is merely an example of the aerosol-generating substrate. The aerosol source contained in the aerosol-generating substrate may be a solid or a liquid. The aerosol source may be a liquid such as a polyhydric alcohol, for example, glycerin or propylene glycol, or water, and a mixture thereof. The aerosol source may include a tobacco raw material or an extract derived from a tobacco raw material that releases an inhaling flavor component when heated. In a case where the flavor inhaler 1 is a medical inhaler such as a nebulizer, the aerosol source may include a medicine to be inhaled by a patient. The aerosol-generating substrate may include no flavor source in some applications.

As illustrated in FIG. 5 and FIG. 6, the flavor inhaler 1 has a top housing 131A, a bottom housing 131B, a cover 132, a switch 133, and a lid part 134. The top housing 131A and the bottom housing 131B are connected to each other to form an outermost housing 131 of the flavor inhaler 1. The housing 131 may be sized to fit in a user's hand. In this case, when the user uses the flavor inhaler 1, the user can hold the flavor inhaler 1 with their hand and inhale the aerosol.

The top housing 131A has an opening (not illustrated), and the cover 132 is coupled to the top housing 131A such that the opening is closed. As illustrated in FIG. 6, the cover 132 has an opening 132B into which the inhalation article 140 can be inserted. The lid part 134 is configured to open and close the opening 132B in the cover 132. Specifically, the lid part 134 is attached to the cover 132 and is configured to be movable along the front surface of the cover 132 between a first position at which the opening 132B is closed and a second position at which the opening 132B is opened.

The switch 133 is used to switch on and off the operation of the flavor inhaler 1. For example, as illustrated in FIG. 6, the user operates the switch 133 with the inhalation article 140 inserted into the opening 132B to supply electric power from the battery (not illustrated) to a heater unit (not illustrated). As a result, the inhalation article 140 can be heated without being burned. When the inhalation article 140 is heated, an aerosol is generated from the aerosol source included in the inhalation article 140, and the flavor of the flavor source is incorporated into the aerosol. The user inhales a portion of the inhalation article 140 (a portion illustrated in FIG. 6) protruding from the flavor inhaler 1, thereby being able to inhale the aerosol containing the flavor. In this specification, a direction in which an aerosol-generating substrate such as the inhalation article 140 is inserted into the opening 132B is referred to as a longitudinal direction of the flavor inhaler 1.

The configuration of the flavor inhaler 1 illustrated in FIG. 5 and FIG. 6 is merely an example of the configuration of a flavor inhaler according to the present disclosure. The flavor inhaler according to the present disclosure can be configured in various forms such that an aerosol can be generated by heating an aerosol-generating substrate including an aerosol source and the user can inhale the generated aerosol.

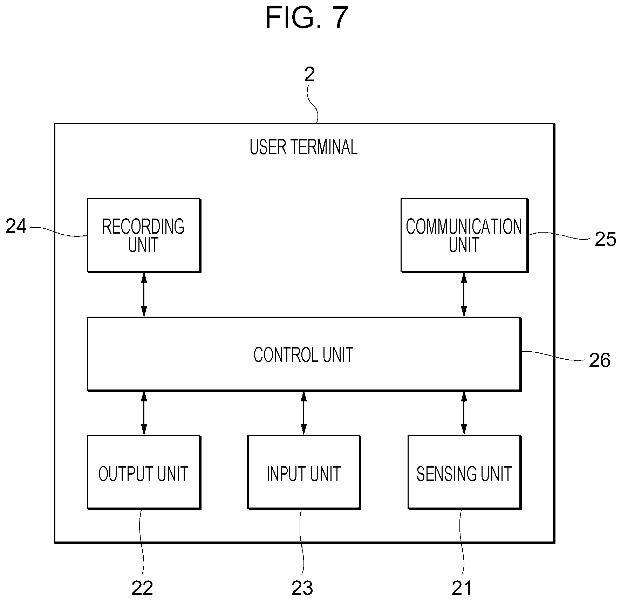

FIG. 7 is a block diagram of a schematic configuration of a user terminal according to the embodiment of the present invention. It should be noted that FIG. 7 schematically and conceptually illustrates components included in the user terminal 2 and does not illustrate the precise arrangement, shape, size, positional relationship, and the like of the components and the user terminal 2. It should also be noted that the user terminal 2 may include a component not illustrated. A non-limiting example of the user terminal 2 is a computer such as a smartphone, a tablet, or a personal computer. For example, a sensing unit 21 described below may be implemented by a digital camera externally connected to the computer.

The sensing unit 21 detects an externally observable predetermined change generated in at least a portion of the flavor inhaler 1, for example, in the change part 12. The sensing unit 21 may be implemented using at least a digital camera, a temperature sensor, or the like serving as a hardware resource.

An output unit 22 executes a message output process on the basis of output information notified from the flavor inhaler 1 illustrated in FIG. 1. The output unit 22 may execute an audio output process on the basis of output information notified from the flavor inhaler 1. The output unit 22 displays information indicating that the predetermined change described above has been detected. The output unit 22 may be implemented using at least a display (including a touch panel display, for example) or the like serving as a hardware resource.

An input unit 23 receives an input from the user. The input unit 23 may be implemented using at least a keyboard, a mouse, a touch panel display, or the like serving as a hardware resource.

A recording unit 24 stores programs, data, and the like. The recording unit 24 may be implemented using at least an HDD (Hard Disk Drive), an SSD (Solid State Drive), a memory, or the like serving as a hardware resource.

A communication unit 25 communicates with another computer. The communication unit 25 may be implemented using at least a network interface serving as a hardware resource.

A control unit 26 performs various controls. The control unit 26 may be configured to transmit and receive data via the communication unit 25. The output unit 22 is capable of outputting information based on the received output information. For example, the control unit 26 may be configured to make a determination related to the way in which the user inhales. The output unit 22 can further display a result of the determination. Further, the control unit 26 may be configured to enable the user to select one of a plurality of ways of inhaling via the input unit 23. The output unit 22 may be able to further display information based on the selected way of inhaling. The control unit 26 may be implemented using at least a processor or the like serving as a hardware resource.

Various functions of the user terminal 2 may be implemented by using an application operating on the user terminal 2. The user terminal 2 may download an application and implement various functions by using the downloaded application. Alternatively, the user terminal 2 may download a program for implementing various functions of the user terminal 2 and execute the downloaded program to implement various functions.

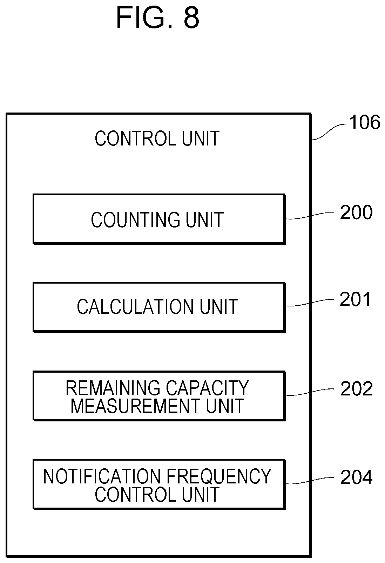

FIG. 8 is a schematic configuration diagram illustrating an example functional configuration of a control unit according to the embodiment of the present invention. As illustrated in FIG. 8, the control unit 106 functionally includes a counting unit 200, a calculation unit 201, a remaining-capacity measurement unit 202, and a notification frequency control unit 204. The control unit 106 can be implemented by, for example, a CPU or the like executing a program stored in the memory 114 illustrated FIGs. 3 and 4. Alternatively, the control unit 106 may be implemented by downloading a program to be used for processing of the control unit 106 and executing the downloaded program. The control unit 13 illustrated in FIG. 2A may functionally include the counting unit 200, the calculation unit 201, the remaining-capacity measurement unit 202, and the notification frequency control unit 204.

The counting unit 200 counts the number of puffs indicating the number of times a puff action is performed. For example, the sensor 11 (inhalation sensor) illustrated in FIG. 2A detects a puff action performed by the user on the flavor inhaler 1 and outputs the detect result to the counting unit 200 as detection information. The sensor 11 may output detection information each time a puff action is detected, or may output detection information when a puff action is detected a plurality of times. The counting unit 200 counts the number of puffs taken by the user on the basis of the detection information from the sensor 11.

For example, when the counted number of puff actions reaches a predetermined number of puffs, the counting unit 200 may reset the counted number of puffs and restart counting the number of puffs. The counting unit 200 may count, as the number of puffs, a total of a predetermined number of puff actions continuously performed from the start of inhalation (first puff action). The counting unit 200 may count the puff action in each continuous puff action period indicating a period of a series of actions in which the puff action is repeated. The counting unit 200 may reset the number of puffs each time the continuous puff action period ends, and restart counting the number of puffs in the next continuous puff action period. The counting unit 200 may count, as the number of puffs, the total number of puff actions continuously executed over a plurality of continuous puff action periods.

The calculation unit 201 may calculate, based on the counted number of puffs, the number of remaining puffs indicating the remaining number of times the puff action is executable. For example, in a case where a maximum of 50 puff actions is executable with a single liquid (aerosol source), when the counted number of puffs is 30, the number of remaining puffs may be calculated as 20. Since it is considered that the heating period of time of each puff action is not actually constant, the electric power consumed by each puff action is different. Thus, depending on the puff action of the user, the battery remaining capacity varies, and the maximum number of puff actions varies. In such a case, the number of remaining puffs may be calculated, based on at least one of fluctuations in the heating period of time of each puff action or fluctuations in battery remaining capacity, after the maximum number of puffs is adjusted for each puff action.

The remaining-capacity measurement unit 202 measures the remaining capacity of a battery that supplies electric power to the flavor inhaler 1 illustrated in FIG. 1. The remaining-capacity measurement unit 202 measures the remaining capacity of the battery on the basis of, for example, information such as the SOC, the integrated current value, or the voltage of the battery 110 detected by the sensor 112 illustrated in FIG. 3 and FIG. 4. For example, the remaining-capacity measurement unit 202 may monitor the voltage value of the battery 110 to measure the remaining capacity of the battery 110 in accordance with the amount of fluctuations in the voltage value.

The notification frequency control unit 204 controls the frequency of notifying the user terminal 2 of the state information as a predetermined frequency (for example, every 20 puffs). The notification frequency control unit 204 controls the notification frequency on the basis of the number of puffs output from the counting unit 200 or the number of remaining puffs. Further, the notification frequency control unit 204 controls the notification frequency on the basis of the battery remaining capacity measured by the remaining-capacity measurement unit 202.

For example, in a case where execution of the notification every ten puffs is changed to execution of the notification every 20 puffs, that is, in a case where the notification frequency is reduced, an increase in the electric power consumption of the flavor inhaler 1 can be suppressed, and thus the consumption of the battery included in the flavor inhaler 1 can further be reduced. In contrast, in a case where execution of the notification every 20 puffs is changed to execution of the notification every five puffs, that is, in a case where the notification frequency is increased, it is possible to frequently notify the user of the state of the flavor inhaler 1. It is therefore possible to enable the user to quickly grasp the state of the flavor inhaler 1.

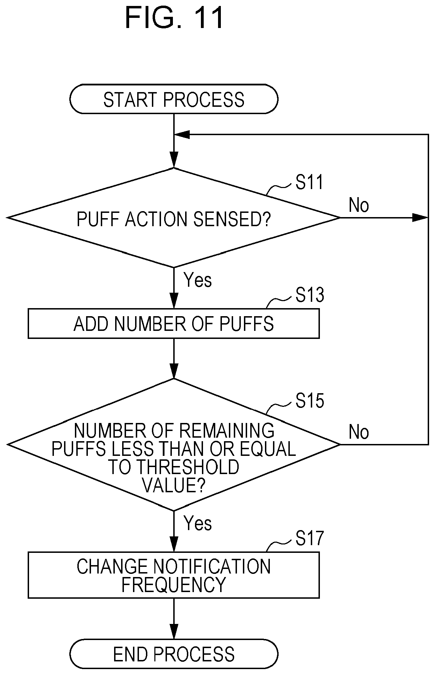

The control of the notification frequency may be executed a plurality of times. For example, the flavor inhaler 1 may repeatedly execute steps S11 to S17 illustrated in FIG. 11 to perform control to increase or decrease the notification frequency in multiple stages. For example, when performing control to increase the notification frequency in multiple stages, the flavor inhaler 1 may perform control to temporarily decrease the notification frequency during the control. In contrast, when performing control to decrease the notification frequency in multiple stages, the flavor inhaler 1 may perform control to temporarily increase the notification frequency during the control.

### [State Notification Process]

### <First Embodiment>

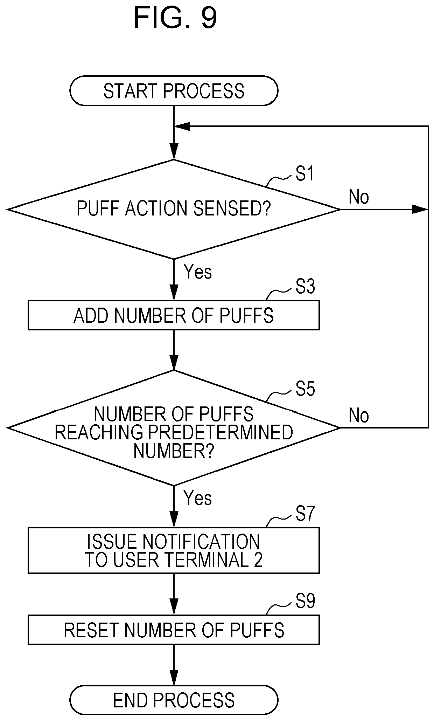

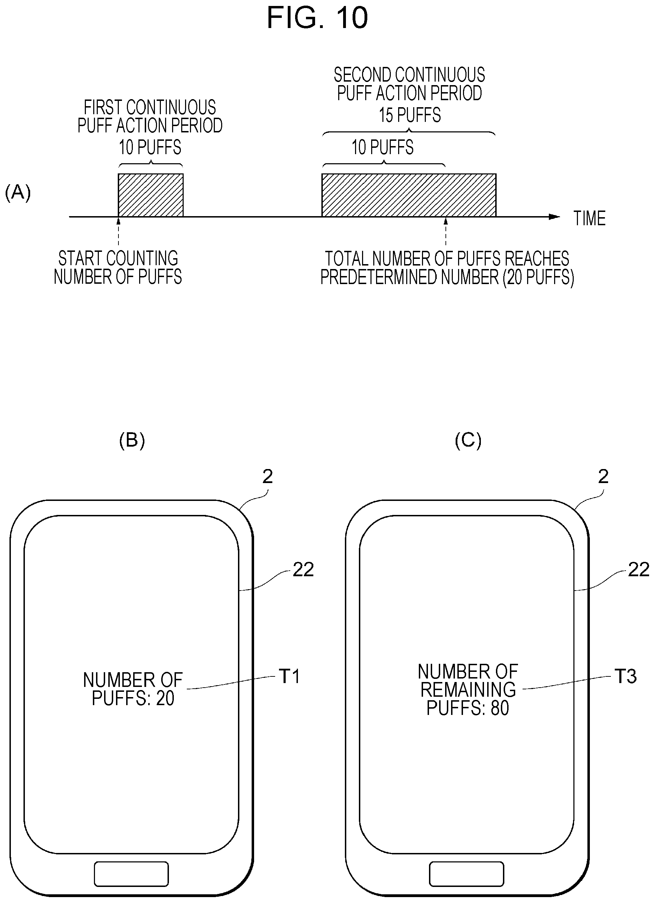

An example of a state notification process according to a first embodiment of the present invention will be described with reference to FIG. 9 and FIG. 10. FIG. 9 is a flowchart illustrating an example of a state notification process according to the first embodiment of the present invention. FIG. 10(A) is an explanatory diagram illustrating an example of the state notification process according to the first embodiment of the present invention. First, as a premise of the state notification process according to this embodiment, for example, a user presses a power button (not illustrated) on the outer surface of the flavor inhaler 1 to start the flavor inhaler 1. The method for starting the flavor inhaler 1 is not limited to that described above, and any other method may be used. Also as a premise of state notification processes according to embodiments described below, the flavor inhaler 1 is started. As illustrated in FIG. 9 and FIG. 10(A), in step S1, upon sensing a puff action of the user using the flavor inhaler 1 (in the case of Yes), the flavor inhaler 1 illustrated in FIG. 1 proceeds to step S3. In the case of No, the flavor inhaler 1 waits until a puff action is sensed. In step S3, the flavor inhaler 1 executes counting of the number of puffs and adds the number of puffs. In addition to counting of the number of puffs in response to sensing of a puff action as a trigger, for example, the flavor inhaler 1 executes counting of the number of puffs in response to insertion of a new aerosol source substrate (for example, a liquid) as a trigger. Specifically, when a new aerosol source substrate is inserted, the flavor inhaler 1 resets the counting of the number of puffs and newly starts counting the total number of puffs. As illustrated in FIG. 10(A), when the total number of puffs counted from a first continuous puff action period to a second continuous puff action period, each period indicating a period of a series of actions in which the puff action is repeated, reaches a predetermined number (for example, 20) (in the case of Yes) in step S5, the flavor inhaler 1 proceeds to step S7. In the case of No, the flavor inhaler 1 returns to step S1.

In step S7, the flavor inhaler 1 notifies the user terminal 2 of state information regarding the state of the flavor inhaler 1 at the user terminal 2, based on the counted number of puffs, at a predetermined frequency. Upon receipt of the state information regarding the state of the flavor inhaler 1 from, for example, the communication unit 14 illustrated in FIG. 2A or the communication unit 108 illustrated in FIG. 3 or FIG. 4, the user terminal 2 outputs the state of the flavor inhaler 1 on the basis of the received state information.

FIGs. 10(B) and 10(C) are diagrams illustrating an example of screens output from an output unit of a user terminal according to the first embodiment of the present invention. As illustrated in FIG. 10(B), for example, text information T1 representing number-of-puff information "Number of puffs: 20" is displayed on the screen of the output unit 22 of the user terminal 2 as the state information of the flavor inhaler 1. On the other hand, as illustrated in FIG. 10(C), for example, text information T3 representing number-of-remaining-puff information "Number of remaining puffs: 80" is displayed on the screen of the output unit 22 of the user terminal 2 as the state information of the flavor inhaler 1. Both the number-of-puff information and the number-of-remaining-puff information may be displayed on the screen of the output unit 22 of the user terminal 2. The information displayed on the screen of the output unit 22 of the user terminal 2 may include the information regarding puffs, such as the number-of-puff information and the number-of-remaining-puff information, and remaining-capacity information regarding the remaining capacity of the battery. The information displayed on the screen of the output unit 22 of the user terminal 2 may include information regarding components, for example, the remaining capacity of a tobacco capsule or a liquid cartridge or information regarding the type thereof.

According to these configurations, the userterminal 2 can notify the user of the state of the flavor inhaler 1 (for example, at least one of the number of puffs or the number of remaining puffs) in a more easily visually recognized manner.

Referring back to FIG. 9, in step S9, the flavor inhaler 1 resets the total number of puffs counted in response to sensing of a puff action as a trigger. In this way, the flavor inhaler 1 repeatedly executes steps S1 to S9 illustrated in FIG. 9. As a result, the flavor inhaler 1 can notify the user terminal 2 of state information regarding the state of the flavor inhaler 1 at the user terminal 2 at a predetermined frequency (for example, every 20 puffs).

As described above, according to the first embodiment of the present invention, the flavor inhaler 1 notifies a user terminal of state information regarding the state of the flavor inhaler at the user terminal, based on the counted number of puffs, at a predetermined frequency. Since an increase in the electric power consumption of the flavor inhaler can be suppressed, the consumption of a battery included in the flavor inhaler can be reduced.

### <Second Embodiment>

In a second embodiment, the notification frequency is controlled based on the number of remaining puffs. FIG. 11 is a flowchart illustrating an example of a state notification process according to the second embodiment of the present invention. As illustrated in FIG. 11, upon sensing a puff action of a user using the flavor inhaler 1 (in the case of Yes) in step S11, the flavor inhaler 1 illustrated in FIG. 1 starts counting the number of puffs. The flavor inhaler 1 proceeds to step S13. In step S13, the flavor inhaler 1 adds the number of puffs. If the number of remaining puffs is less than or equal to a threshold value (for example, 20) (in the case of Yes) in step S15, the flavor inhaler 1 proceeds to step S17. For example, in a case where a maximum of 50 puff actions is executable with a single liquid, when the counted number of puffs is 30, the flavor inhaler 1 calculates the number of remaining puffs as 20. In this case, the flavor inhaler 1 determines that the number of remaining puffs of 20 is less than or equal to the threshold value. On the other hand, when the number of remaining puffs is 25, which is not less than or equal to the threshold value (in the case of No), the flavor inhaler 1 returns to step S11.

In step S17, the flavor inhaler 1 controls the frequency of providing notification of number-of-remaining-puff information regarding the number of remaining puffs as the state information of the flavor inhaler 1. For example, the flavor inhaler 1 changes the execution of the notification every ten puffs to the execution of the notification every five puffs (makes a change such that the notification frequency is increased). In contrast, the flavor inhaler 1 changes the execution of the notification every five puffs to the execution of the notification every ten puffs (makes a change such that the notification frequency is decreased).

As described above, according to the second embodiment of the present invention, the flavor inhaler 1 controls the notification frequency on the basis of the number of remaining puffs. As a result, when the flavor inhaler 1 makes a change such that the notification frequency is increased, it is possible to frequently notify the user of the state of the flavor inhaler 1. Accordingly, it is possible to enable the user to quickly grasp the state of the flavor inhaler 1. When the flavor inhaler 1 makes a change such that the notification frequency is decreased, an increase in the electric power consumption of the flavor inhaler 1 can be suppressed, and thus the consumption of the battery included in the flavor inhaler 1 can further be reduced.

### <Third Embodiment>

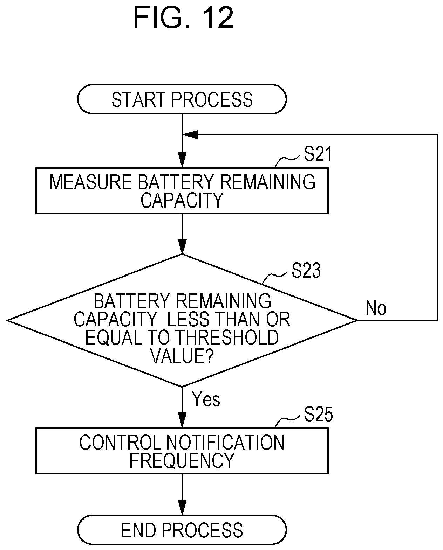

In a third embodiment, the notification frequency is controlled based on the remaining capacity of a battery that supplies electric power to a flavor inhaler. FIG. 12 is a flowchart illustrating an example of a state notification process according to the third embodiment of the present invention. As illustrated in FIG. 12, in step S21, the flavor inhaler 1 illustrated in FIG. 1 measures the remaining capacity of the battery included in the flavor inhaler 1. When the battery remaining capacity is less than or equal to a threshold value (for example, 30%) (in the case of Yes) in step S23, the flavor inhaler 1 proceeds to step S25. For example, if the measured remaining capacity of the battery is 25%, it is determined that the measured remaining capacity of battery is less than or equal to the threshold value (30%). On the other hand, if the measured remaining capacity of battery is 40%, which is not less than or equal to the threshold value (in the case of No), the flavor inhaler 1 returns to step S21.

In step S25, the flavor inhaler 1 controls the frequency of providing notification of remaining-battery-capacity information regarding the remaining capacity of the battery as the state information of the flavor inhaler 1. For example, the flavor inhaler 1 changes the execution of the notification each time the number of puffs reaches five to the execution of the notification each time the number of puffs reaches ten (makes a change such that the notification frequency is decreased). In contrast, for example, the flavor inhaler 1 changes the execution of the notification each time the number of puffs reaches ten to the execution of the notification each time the number of puffs reaches five (makes a change such that the notification frequency is increased).

As described above, according to the third embodiment of the present invention, the flavor inhaler 1 controls the notification frequency on the basis of the remaining capacity of the battery. When the flavor inhaler 1 makes a change such that the notification frequency is decreased, an increase in the electric power consumption of the flavor inhaler 1 can be suppressed, and thus the consumption of the battery included in the flavor inhaler 1 can further be reduced. In contrast, when the flavor inhaler 1 makes a change such that the notification frequency is increased, it is possible to frequently notify the user of the state of the flavor inhaler 1. Accordingly, it is possible to enable the user to quickly grasp the state of the flavor inhaler 1.

<Fourth Embodiment>

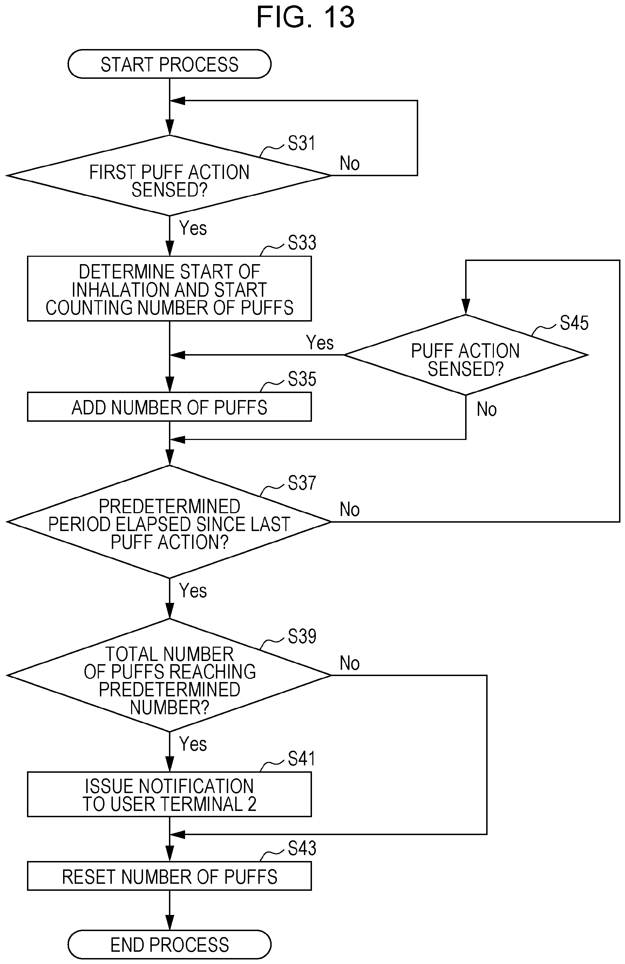

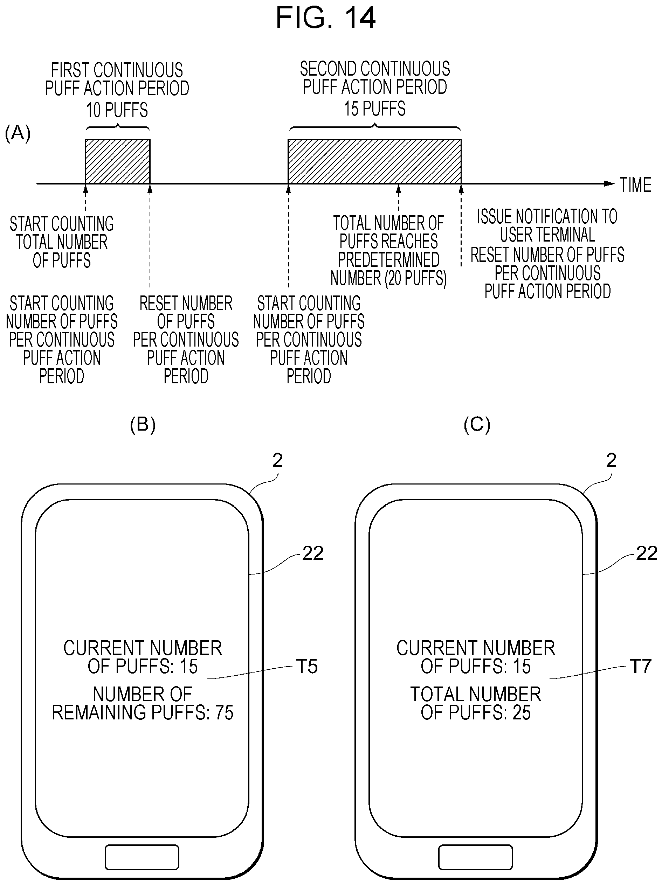

In a fourth embodiment, a user terminal is notified of information regarding the number of puffs at the end of a continuous puff action period indicating a period of a series of actions in which a predetermined number of puff actions are repeated. FIG. 13 is a flowchart illustrating an example of a state notification process according to the fourth embodiment of the present invention. FIG. 14(A) is an explanatory diagram illustrating an example of the state notification process according to the fourth embodiment of the present invention. As illustrated in FIG. 13 and FIG. 14(A), upon sensing the first puff action (start of inhalation) of a user using the flavor inhaler 1 (in the case of Yes) in step S31, the flavor inhaler 1 illustrated in FIG. 1 proceeds to step S33. In the case of No, the flavor inhaler 1 waits until the first puff action is sensed.

In step S31, for example, upon sensing a puff action after a predetermined period (such as, for example, one minute) has elapsed since the preceding puff action, the flavor inhaler 1 determines that the sensed puff action is the first one. Upon sensing a puff action immediately after the start of the flavor inhaler 1, the flavor inhaler 1 may determine that the sensed puff action is the first one.

In step S33, the flavor inhaler 1 starts counting the number of puffs when it is determined in step S31 that the first puff action of the user (start of inhalation) has been sensed. For example, as illustrated in FIG. 14(A), at the beginning of the first continuous puff action period, the flavor inhaler 1 starts a total puff number count to continuously count the number of puffs over a plurality of continuous puff action periods. Further, the flavor inhaler 1 starts a puff number count per continuous puff action period. As described below, the puff number count per continuous puff action period is reset after the end of each continuous puff action period. That is, as illustrated in FIG. 14(A), the puff number count in the first continuous puff action period is reset after the end of the first continuous puff action period, and the puff number count in the second continuous puff action period is reset after the end of the second continuous puff action period.

In step S35, the flavor inhaler 1 adds the number of puffs. For example, as illustrated in FIG. 14(A), the flavor inhaler 1 calculates the number of remaining puffs on the basis of the total puff number count, and calculates the number of puffs in each continuous puff action period on the basis of the puff number count per continuous puff action period.

If a predetermined period (such as, for example, one minute) has elapsed since the last puff action (in the case of Yes) in step S37, the flavor inhaler 1 proceeds to step S39. Here, the "last puff action" refers to, for example, the "latest puff action" if the next puff action is not executed for a predetermined period (such as, for example, one minute) from the "latest puff action". In the case of No, the flavor inhaler 1 proceeds to step S45. As illustrated in FIG. 14(A), when the total number of puffs counted from the first puff action reaches a predetermined number (for example, 20) (in the case of Yes) in step S39, the flavor inhaler 1 proceeds to step S41. In the case of No, the flavor inhaler 1 proceeds to step S43. In step S45, upon sensing a puff action of the user (in the case of Yes), the flavor inhaler 1 proceeds to step S35. In the case of No, the flavor inhaler 1 proceeds to step S37.

In step S41, the flavor inhaler 1 further notifies the user terminal 2 of information regarding the number of remaining puffs at the end of the second continuous puff action period from the first continuous puff action period at the user terminal 2, based on the calculated number of remaining puffs. For example, in a case where the maximum number of puff actions is 100, the total number of puffs of 25 is subtracted from the maximum number of puff actions to calculate the number of remaining puffs as 75. The flavor inhaler 1 further notifies the user terminal 2 of information regarding the total number of puffs (25) until the end of the second continuous puff action period from the first continuous puff action period at the user terminal 2, based on the counted total number of puffs. Further, the flavor inhaler 1 may notify the user terminal 2 of information regarding the number of puffs (15) in the second continuous puff action period (puff action period) including the fifteenth puff action (last puff action) at the user terminal 2, based on the number of puffs in each continuous puff action period.

FIGs. 14(B) and 14(C) are diagrams illustrating an example of screens output from an output unit of a user terminal according to the fourth embodiment of the present invention. As illustrated in FIG. 14(B), for example, text information T5 including information regarding the number of puffs in the second continuous puff action period, namely, "Current number of puffs: 15", and information regarding the number of remaining puffs at the end of the last puff action, namely, "Number of remaining puffs: 75", may be displayed on the screen of the output unit 22 of the user terminal 2 as the state information of the flavor inhaler 1. As illustrated in FIG. 14(C), for example, text information T7 including information regarding the number of puffs in the second continuous puff action period, namely, "Current number of puffs: 15", and information regarding the total number of puffs from the first puff action to the end of the last puff action, namely, "Total number of puffs: 25", may be displayed on the screen of the output unit 22 of the user terminal 2 as the state information of the flavor inhaler 1.

Only the information regarding the number of puffs in the second continuous puff action period, namely, "Current number of puffs: 15", may be displayed on the screen of the output unit 22 of the user terminal 2. Alternatively, all of the information regarding the number of puffs in the second continuous puff action period, namely, "Current number of puffs: 15", the information regarding the total number of puffs from the first puff action to the end of the last puff action, namely, "Total number of puffs: 25", and the information regarding the number of remaining puffs at the end of the last puff action, namely, "Number of remaining puffs: 75", may be displayed on the screen of the output unit 22 of the user terminal 2. The number of "continuous puff action periods" is not particularly limited. That is, the number of "continuous puff action periods" is not limited to two, namely, the first continuous puff action period and the second continuous puff action period illustrated in FIG. 14(A), and may be one or three or more.

According to these configurations, the userterminal 2 can notify the user of the state of the flavor inhaler 1 (for example, at least one of the number of puffs in the current continuous puff action period, the total number of puffs, or the number of remaining puffs) in a more easily visually recognized manner.

In step S43, as illustrated in FIG. 14(A), the flavor inhaler 1 resets the number of puffs (15) counted in the second continuous puff action period.

As described above, according to the fourth embodiment of the present invention, the flavor inhaler 1 notifies a user terminal of information regarding the number of puffs at the end of a period of a series of actions in which a puff action is repeated. Since an increase in the electric power consumption of the flavor inhaler can be suppressed, the consumption of a battery included in the flavor inhaler can be reduced.

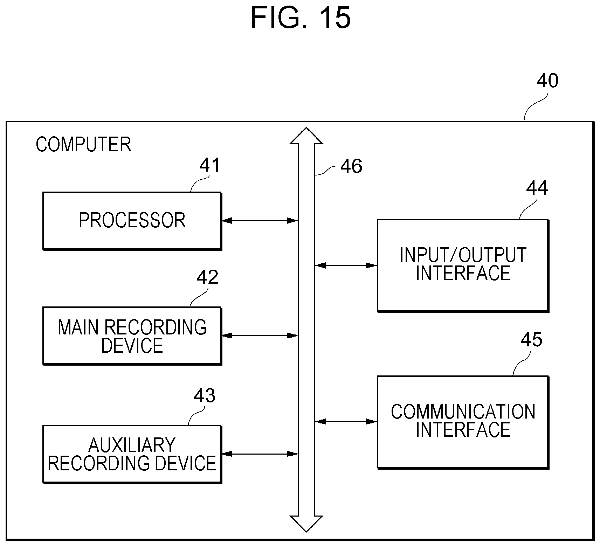

FIG. 15 is a diagram illustrating an example hardware configuration of a computer according to an embodiment of the present invention. An example hardware configuration of a computer that can be used to configure the user terminal 2 illustrated in FIG. 1 will be described with reference to FIG. 15.

As illustrated in FIG. 15, a computer 40 mainly includes, as hardware resources, a processor 41, a main recording device 42, an auxiliary recording device 43, an input/output interface 44, and a communication interface 45, and these are connected to each other via a bus line 46 including an address bus, a data bus, a control bus, and the like. An interface circuit (not illustrated) may be interposed, as necessary, between the bus line 46 and each hardware resource.

The processor 41 controls the entire computer. The main recording device 42 provides a work area for the processor 41 and is a volatile memory such as an SRAM (Static Random Access Memory) or a DRAM (Dynamic Random Access Memory). The auxiliary recording device 43 is a non-volatile memory such as an HDD, an SSD, or a flash memory that stores a program, data, and the like that are software. The program, the data, and the like are loaded from the auxiliary recording device 43 to the main recording device 42 via the bus line 46 at any point in time.

The input/output interface 44 performs one or both of presenting information and receiving input of information, and is a digital camera, a keyboard, a mouse, a display, a touch panel display, a microphone, a speaker, a temperature sensor, or the like.

It will be apparent to a person skilled in the art that the computer 40 can function as desired means, execute desired steps, and implement desired functionality through cooperation of the hardware resources exemplified above and software.

The embodiments described above are intended to facilitate understanding of the present invention and is not to be construed as limiting the present invention. The present invention may be modified/improved without departing from the gist thereof, and the present invention also includes equivalents thereof.

As illustrated in FIG. 10(B), FIG. 10(C), and FIG. 14(B), the user terminal 2 outputs state information of a flavor inhaler on the display unit 22 as text information, which is not limited to this form. For example, the display unit 22 of the user terminal 2 may output the state of the flavor inhaler to the user by audio information, video information, image information, or the like, instead of the text information or together with the text information. The means or method by which the user terminal 2 outputs the state of the flavor inhaler is not limited to these examples, and any means or method that enables the user to easily recognize the state of the flavor inhaler may be used to output the state of the flavor inhaler.

The embodiments described above can be combined with each other without departing from the gist of the present invention. For example, the notification frequency control process according to the second embodiment illustrated in FIG. 11 can be combined with the state notification process according to the first embodiment illustrated in FIG. 9 and FIG. 10 or the state notification process according to the fourth embodiment illustrated in FIG. 13 and FIG. 14. Further, the notification frequency control process according to the third embodiment illustrated in FIG. 12 can be combined with the state notification process according to the first embodiment illustrated in FIG. 9 and FIG. 10 or the state notification process according to the fourth embodiment illustrated in FIG. 13 and FIG. 14.

### Reference Signs List

- 1, 1A, 1B: flavor inhaler
- 2: user terminal
- 11: sensor
- 12: change part
- 13: control unit
- 14: communication unit
- 21: sensing unit
- 22: output unit
- 23: input unit
- 24: recording unit
- 25: communication unit
- 26: control unit
- 100: state notification processing system
- 102: first member
- 104: second member
- 106: control unit
- 108: communication unit
- 110: battery
- 112: sensor
- 114: memory
- 116: reservoir
- 118: atomizing unit
- 120: air intake flow path
- 121: aerosol flow path
- 122: inhalation port part
- 126: third member
- 128: flavor source
- 131: housing
- 131A: top housing
- 131B: bottom housing
- 132: cover
- 132B: opening
- 133: switch
- 134: lid part
- 140: inhalation article
- 161, 162: end
- 200: counting unit
- 202: remaining-capacity measurement unit
- 204: notification frequency control unit

## Claims

1. A battery unit in an aerosol generation device for generating an aerosol, the battery unit comprising:
a counting unit that counts the number of puffs indicating the number of times a puff action for inhaling the aerosol is performed; and
a notification unit that notifies a user terminal of state information regarding a state of the aerosol generation device at the user terminal, based on the counted number of puffs, at a predetermined frequency.

2. The battery unit according to claim 1, further comprising:
a calculation unit that calculates the number of remaining puffs indicating the remaining number of times the puff action is executable, based on the counted number of puffs; and
a notification frequency control unit that controls a frequency of notifying the user terminal of the state information, based on the number of remaining puffs.

3. The battery unit according to claim 2, wherein the notification unit notifies the user terminal of, as the state information, number-of-remaining-puff information regarding the number of remaining puffs at the user terminal.

4. The battery unit according to claim 2 or 3, wherein the notification frequency control unit performs control such that the frequency is increased when the number of remaining puffs is less than or equal to a predetermined threshold value.

5. The battery unit according to claim 1, further comprising:
a notification frequency control unit that controls a frequency of notifying the user terminal of the state information; and
a remaining-capacity measurement unit that measures a remaining capacity of a battery that supplies electric power to the aerosol generation device, wherein
the notification frequency control unit controls the frequency of notifying the user terminal of the state information, based on the remaining capacity.

6. The battery unit according to claim 5, wherein the notification unit notifies the user terminal of, as the state information, remaining-capacity information regarding the remaining capacity at the user terminal.

7. The battery unit according to claim 5 or 6, wherein the notification frequency control unit performs control such that the frequency is decreased when the remaining capacity is less than or equal to a predetermined threshold value.

8. The battery unit according to any one of claims 1 to 7, wherein
the counting unit further counts, based on the number of puffs, the number of puffs in each of continuous puff action periods, each continuous puff action period indicating a period of a series of actions in which the puff action is repeated, and
the notification unit notifies the user terminal of, as the state information, information regarding the number of puffs in a continuous puff action period including a last puff action at the user terminal, based on the number of puffs in each of the continuous puff action periods, in response to a predetermined period having elapsed since the last puff action.

9. An information processing method executed by an aerosol generation device for generating an aerosol, the information processing method comprising:
a step of counting the number of puffs indicating the number of times a puff action for inhaling the aerosol is performed; and
a step of notifying a user terminal of state information regarding a state of the aerosol generation device at the user terminal, based on the number of puffs, at a predetermined frequency.

10. A program for causing a computer to function as:
a counting unit that counts the number of puffs indicating the number of times a puff action for inhaling an aerosol is performed; and
a notification unit that notifies a user terminal of state information regarding a state of an aerosol generation device at the user terminal, based on the number of puffs, at a predetermined frequency.
